# EUROPÄISCHE PATENTSCHRIFT

(11) **EP 3 044 342 B1**
(45) Veröffentlichungstag und Bekanntmachung des Hinweises auf die Patenterteilung: **07.11.2018**
(21) Anmeldenummer: 14792375.9
(22) Anmeldetag: 09.09.2014
(51) Int. Cl.: C22B 3/00, C22B 59/00

(54) **HYDROMETALLURGISCHES VERFAHREN ZUR VERWERTUNG VON SELTENERDMETALLBORIDABFÄLLEN**
HYDROMETALLURGICAL PROCESS FOR THE RECOVERY OF RARE EARTH BORIDE WASTES
PROCÉDÉ HYDROMÉTALLURGIQUE POUR LE RECYCLAGE DE DÉCHETS DE BORURES DE TERRES RARES

(30) Priorität: 09.09.2013 DE 102013014780
(43) Veröffentlichungstag der Anmeldung: 20.07.2016
(73) Patentinhaber: Loser, Ulrich, 04721 Rosswein / OT Grunau (DE); Palitzsch, Wolfram, 09599 Freiberg (DE)
(72) Erfinder: PALITZSCH, Wolfram, 09599 Freiberg (DE)
(74) Vertreter: Rumrich, Gabriele
(86) Internationale Anmeldenummer: PCT/DE2014/100328
(87) Internationale Veröffentlichungsnummer: WO 2015/032393

(56) Entgegenhaltungen:
- EP-A1- 2 439 293
- WO-A1-2007/099119
- US-A- 3 725 296
- BINNEMANS KOEN ET AL: "Recycling of rare earths: a critical review", JOURNAL OF CLEANER PRODUCTION, ELSEVIER, NL, Bd. 51, 5. Januar 2013 (2013-01-05), Seiten 1-22, XP028551490, ISSN: 0959-6526, DOI: 10.1016/J.JCLEPRO.2012.12.037
- Hollemann-Wiberg: "Lehrbuch der Anorganischen Chemie", 1. Januar 1985 (1985-01-01), Walter de Gruyter, Berlin, New York, XP002735161, ISBN: 3-11-007511-3 Seite 1269, S. 1269: "3 Trennung"
- LEONARD FABES ET AL: "Reagents for High Temperature Aqueous Chemistry: Trifluoromethanesulfonic Acid and its Salts", CANADIAN JOURNAL OF CHEMISTRY, Bd. 53, Nr. 20, 15. Oktober 1975 (1975-10-15), Seiten 3053-3059, XP055164984, ISSN: 0008-4042, DOI: 10.1139/v75-433

## Beschreibung

Die vorliegende Erfindung betrifft ein Hydrometallurgisches Verfahren (technisches Verfahren) zur Verwertung von Seltenerdmetallboridabfällen, insbesondere zum Recycling seltenerdmetallhaltiger Boridabfälle, wie sie beispielsweise als Keramiken (z.B. Lanthanhexaborid) oder als Permanentmagnete, z.B. auf der Basis von Neodym-Eisen-Bor eine bedeutende wirtschaftliche Rolle spielen.

Borreiche Boride finden Anwendung als Hochleistungskeramiken, weil sie herausragende Eigenschaften, wie große Härte, hohe Schmelzpunkte und üblicherweise eine extreme chemische Resistenz aufweisen [Riedel, R. Handbook of Ceramic Hard Materials 2000, Wiley-VCH Verlag, Weinheim]. Gegenüber Mineralsäuren und gegenüber hohen Temperaturen sind diese Materialien inert. Ringe, Rohre und Platten aus Lanthanhexaborid werden beispielsweise in der Plasmatechnik angewendet. Für Abfälle dieser Art gibt es allerdings aktuell keine Verwertungsmöglichkeiten. Sogenannte Neodym-Magnete (Nd-Fe-B-Magnete), die man als borarme Boride auffassen kann, erlauben heute viele innovative Produktentwicklungen und bilden das Rückgrat für moderne Technologien, wie die Schaffung von Elektromobilität oder Prozesse für die Nutzung der erneuerbaren Energien. So werden erhebliche Mengen unter anderem in Generatoren von Windkraftanlagen und Elektroautos verwendet. Lautsprecher und Anlasser sind weitere Produkte, die auf den besonderen Eigenschaften der Magnete mit Seltenen Erden (SE) aufbauen. Die intermetallischen Verbindungen bestehen aus Seltenerdmetallen (wie Samarium oder Neodym) und Übergangsmetallen (wie Cobalt oder Eisen), wobei in Sm-Co-Materialien zusätzlich noch Gd, Fe, Cu, und Zr enthalten sein können. Auch für das klassische Nd-Fe-B-System spielen - je nach Applikation - noch andere Seltene Erden, wie Pr, Dy und Tb, eine bedeutende Rolle. Bei der Herstellung solcher High-Tech-Magnete des Nd-Types werden allerdings etwa 20 - 30% des Magnetmaterials bei der Bearbeitung zu Abfall, was pro Jahr 1.500 bis 2.500 Tonnen Abfall bedeuten kann. Auch im Falle von Sm-Co-Magneten werden etwa 15 - 30% der Rohmaterialien zu Produktionsabfall [Jinfang Liu and Chins Chinnasamy, Rare Earth Elements Workshop, EPA, Colorado, 2012].
Das Recycling für derartige Materialien steht noch am Anfang. Frühere Ansätze, wie in der Druckschrift US 5,437,709 A beschrieben, wo SE durch Lösen in Magnesium-, Calzium- bzw. Bariumschmelzen zurückgewonnen werden, sind schon aufgrund des hohen Aufwandes und Energieeinsatzes nicht mehr zeitgemäß.

Die Druckschrift DE 198 43 883 C1 behandelt die Wiedergewinnung von SE-Magnetmaterial durch Verwendung von Wasserstoff. Schlussendlich kommt es dabei lediglich zu einer Trennung von unterschiedlichen Magnetmaterialtypen: Sm-Co- und Nd-Fe-B-Legierungen, welche jedoch nicht in ihre einzelnen Elemente zerlegt werden konnten.
In Anbetracht des verschärften Wettbewerbs und steigender Rohstoffpreise besteht ein Bedarf nach einem möglichst vielseitig anwendbaren Recyclingverfahren speziell für seltenerdmetallhaltige Abfälle, auch insbesondere, um der aktuellen Exportabhängigkeit in Bezug auf essentielle High-Tech-Metalle entgegenzuwirken.

In den Druckschriften EP 1 994 189 B1 wird ein Verfahren zum sauren Aufschluss von metallhaltigen Verbindungen und in EP 2 439 293 A1 Verfahren zur Rückgewinnung von Lanthan aus lanthanhaltigen Zeolithen beschrieben, wobei entweder Mischungen von Mineralsäuren und Organosulfonsäuren eingesetzt werden, um Erze zu laugen bzw. Dotierungen von Seltenen Erden aus Zeolithen zu extrahieren. In jedem Fall wird die Gesamtstruktur nicht zerstört, sondern lediglich Seltene Erd Elemente in Lösung gebracht. Eine Rückgewinnung der Solventien ist nicht vorgesehen, so dass davon auszugehen ist, dass neben den ausgelaugten Feststoffen auch die Lösemittelbestandteile als Abfälle verworfen werden müssen.

In der Schrift "Recycling of rare earths: a critical review" von Koen Binnemans et al. (2013-01-05, ISSN: 0959-6526) wird unter anderem die Wiederverwertung von Seltenerdmetall-Boriden behandelt.

Alle vorgenannten bekannten Verfahren können nicht auf beispielsweise Lanthanhexaborid angewendet werden.

Die Aufgabe der Erfindung besteht somit darin, ein hydrometallurgisches Verfahren (technisches Verfahren) zur Verwertung von Seltenerdmetallboridabfällen, insbesondere zum Recycling seltenerdmetallhaltiger Boridabfälle bereitzustellen, bzw. im Falle von Magnetabfall die Recyclingverfahren des Standes der Technik ökonomisch und ökologisch zu übertreffen und für entsprechende Keramiken eine Verwertung überhaupt erst zu ermöglichen.

Die Aufgabe der Erfindung wurde überraschenderweise, wie in den Patentansprüchen angegeben, gelöst.

Bei dem erfindungsgemäßen hydrometallurgischen Verfahren zur Verwertung Seltenerdmetallboride (Keramik, Magnete) enthaltender Abfälle werden erfindungsgemäß die Abfallmaterialien mit einer Reaktionslösung aus Wasser, 1 bis 50 Masse-% Organosulfonsäure und im stöchiometrischen Verhältnis zur Organosulfonsäure 1-50 Masse-% eines Oxidationsmittels versetzt, wobei als Oxidationsmittel Perborate, Percarbonate, Hypochlorite oder Peroxide eingesetzt werden, und das Material vollständig aufgelöst und die Organosulfonsäure im Laufe des Prozesses wieder zurückgewonnen.

Mit der erfindungsgemäßen Lösung werden die Selten-Erd-Boride vollständig/komplett aufgelöst und zwar mit einer echten chemischen Reaktion, keine Extraktion ist erforderlich und keine festen Rückstände fallen an. Es wird die für den Lösungsprozess erforderliche Säure direkt im Prozess zurückgewonnen.

Mit diesem technischen bzw. hydrometallurgischen Verfahren zur Verwertung von Seltenerdmetallboridabfällen ist es erstmalig möglich, diese Seltenerdmetallboridabfällen vollständig zu verwerten bzw. zurückzugewinnen.

Dabei lösen sich die Seltenerdmetallboride vollständig auf, wobei das zugegebene Oxidationsmittel die Bildung von giftigen Elementwasserstoffverbindungen, wie etwa Diboran, verhindert und gleichzeitig nützliche Nebenverbindungen bildet, wie etwa Borsäure.

Die Reaktion läuft bevorzugt bei Umgebungstemperatur ab, die Reaktionszeit kann aber auch optional durch Erhöhung der Temperatur entsprechend verkürzt werden. Die eingesetzten festen Reagenzien können auch in gelöster Form eingesetzt werden. Als Oxidationsmittel werden Perborate, Percarbonate, Hypochlorite oder Peroxide verwendet.

Bevorzugt führt die erhaltene Reaktionslösung durch Zugabe von stöchiometrischen Mengen (gerechnet auf den Anteil der SE-Elemente) an Oxalsäure-Dihydrat, wasserfreier Oxalsäure oder Oxalsäurelösungen zur Ausfällung des SE-Oxalates und gleichzeitig zur Rückbildung der jeweiligen Sulfonsäure.
Nach Ausfällung der Oxalate und deren Abtrennung wird das Filtrat einer Destillation, vorzugsweise unter Vakuum, zugeführt und die rückgebildete Sulfonsäure destillativ zurück gewonnen.

Das Bor wird in Form von reiner Borsäure oder nach thermischer Behandlung über 171°C als reines Dibortrioxid zurück gewonnen, wobei mögliche Oxalsäurerückstände thermisch vollständig zersetzt werden.

Seltenerdmetallhaltige Boride werden in einer Mischung aus einer verdünnten Sulfonsäure, vorzugsweise Methansulfonsäure und einem Oxidationsmittel, vorzugsweise Wasserstoffperoxid vollständig aufgelöst. Dabei löst sich gemahlenes Gut schneller als grobstückiges Material.

Die vorliegende Erfindung löst alle bisherigen Schwächen des Standes der Technik für die oben benannten seltenerdhaltigen Abfälle, zum einem, weil die verwendeten Reagenzien vollständig mit den zu recyceltem Material reagieren und zum anderen, weil der Reaktant Organosulfonsäure durch kluge Reaktionsführung zurückgewonnen werden kann - feste Abfälle bleiben nicht zurück. Die Erfindungsgemäße Zugabe von einem Oxidationsmittel, vorzugsweise Wasserstoffperoxid, ermöglicht die Bildung von Borsäure, als willkommenes Nebenprodukt. Diese, so gewollte Reaktion ist gleichzeitig wichtig für die Verhinderung der Bildung von hochgiftigem Diboran oder anderen Metallwasserstoffverbindungen, die unter reduzierenden Bedingungen entstehen könnten. Bei der Reaktion von Seltenerdboriden und Organosulfonsäuren bilden sich Seltenerdsulfonate, vorzugsweise Seltenerdmesylate. Die außergewöhnlich hohe Löslichkeit von Seltenerdmesylaten hat einen wichtigen Anteil an der weiteren Aufbereitbarkeit der Reaktionslösung. Bei Beteiligung von Eisen kann durch entsprechende erhöhte Zugabe an Oxydationsmittel das Eisen bis auf das dreiwertige Eisen-Ion oxidiert werden, da die Abtrennung des Eisens als Fe(III) die Aufbereitung erleichtert.

Unter Ausnutzung der bekannten Unlöslichkeit von SE-Oxalaten gelingt durch stöchiometrische Zugabe von Oxalsäure die Abtrennung der Seltenen Erden aus der Reaktionslösung, überraschender Weise bei gleichzeitiger Rückbildung der verwendeten Sulfonsäure, vorzugsweise Methansulfonsäure, wie im nachfolgend beschriebenen Ausführungsbeispiel 1 aufgeführt wird.

Die ausgefällten SE-Oxalate werden abfiltriert und gewaschen, und stehen einer weiteren, dem Stand der Technik entsprechenden Verarbeitung zur Verfügung. Borsäure kann durch Kristallisation aus dem Filtrat gewonnen werden, wenn es die Konzentration erlaubt. Generell wird das Filtrat anschließend in einer Destillationsanlage unter Vakuum (1 bis 10 mbar) erhitzt, wobei die Methansulfonsäure rückgewonnen werden kann. Der Siedepunkt für Methansulfonsäure wird bei 10 mbar mit 168°C angegeben. Je nach Temperatur im Sumpf verbleibt restliche Borsäure und unumgesetzte Oxalsäure als Rückstand, welcher bei Bedarf durch weiteres Erwärmen über die Zersetzungstemperatur der Oxalsäure (157°C) nun ohne Vakuum von restlicher Oxalsäure rückstandsfrei befreit werden kann, wobei zu beachten ist, dass ab 171°C die Zersetzung der Borsäure einsetzt. Schließlich kann aber auf diesem Weg aus Orthoborsäure über Metaborsäure schließlich unter weiterer Wasserabspaltung Dibortrioxid (B₂O₃) erhalten werden.

Ein weiterer wesentlicher Vorteil dieses Verfahrens liegt in der Umweltverträglichkeit der Methansulfonsäure, da sie nach der OECD Richtlinie 301A biologisch abbaubar ist.

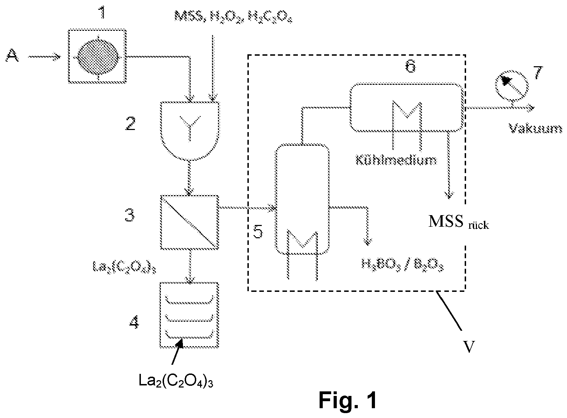

Die Erfindung wird nachfolgend anhand von Ausführungsbeispielen näher erläutert. Die zugehörige Figur 1 zeigt schematisch, wie der Recycling-Prozess verfahrenstechnisch aufgebaut ist.

Die zu recycelnden Seltenerdmetallboride (z.B. LaB₆) in Form der Ausgangssubstanzen A werden bei Bedarf zur Zerkleinerung einer Mühle 1 zugeführt. Die zerkleinerten Ausgangsstoffe werden in einen Rührreaktor 2 geleitet und mit einer Mischung aus Wasser (nicht in der Zeichnung angegeben), einer Sulfonsäure MSS (insbesondere Methylsulfonsäure) und Wasserstoffperoxid H₂C₂O₄ entsprechend Anspruch 1 versetzt. Die Mischung wird bis zum vollständigen Auflösen durch Rühren in Bewegung gehalten. Nach dem vollständigem Auflösen der Boride wird die stöchiometrisch notwendige Menge an Oxalsäure H₂O₂ zugegeben, die für die vollständige Fällung von Seltenerdoxalaten (z.B. Lanthanoxalat La₂(C₂O₄)₃) notwendig ist. Diese (hier das Lanthanoxalat) können dann mittels Filter 3 separiert werden und in der Reinigungseinheit 4 (Waschen und Trocknen) endbehandelt werden, wonach das rückgewonnene Lanthanoxalt als Rohstoff (hier in Pulverform) für weitere Verwendungen als wiederverkaufsfähiges Produkt zur Verfügung steht.
Die restliche Lösung wird in einer Vakuumdestillationsanlage V, bestehend aus Verdampfereinheit 5 und Kondensationseinheit 6 behandelt. Das anliegende Vakuum kann vorteilhafter Weise über eine Anzeige 7 kontrolliert werden.
Dabei wird beispielsweise im Kondensator 6 die Methylsulfonsäure MSS zurückgewonnen, wobei dem Kondensator 6 bedarfsweise ein Kühlmedium zugeführt wird. Sobald alle Methylsulfonsäure MSS abdestilliert wurde, enthält der Rückstand im Verdampfer Borsäure H₃BO₃ und überschüssige Oxalsäure H₂C₂O₄, wobei letztere durch Temperaturerhöhung über 157°C zersetzt wird und man ein reines Borprodukt B₂O₃ erhält. Je nach der eingestellten Temperatur wird aus der Vakuumdestilationsanlage V somit Borsäure H₃BO₃, reines Boroxid B₂O₃ oder eine Mischung daraus ausgegeben.

Nachfolgend werden zwei mögliche Verfahrensvarianten beschrieben:

### Ausführungsbeispiel 1 (nicht erfindungsgemäß)

1,1g Gadoliniumoxid wurden mit 15g 10%iger Methansulfonsäure versetzt. Das Gadoliuniumoxid löst sich vollstandig auf und der pH-Wert der Gadoliniummesylatlösung betrug 6,9. In diese Lösung wurden 1,14g Oxalsäure-Dihydrat gegeben. Die Mischung wurde 30 min. gerührt und anschließend heiß filtriert. Das so gewonnene Gadoliniumoxalat wurde bei 900°C geglüht und anschließend gewogen. Es wurde eine Masse von 1,08g Gadoliniumoxid ermittelt. Das Filtrat enthielt die zurückgewonnene Methansulfonsäure, wie aus der Kohlenstoff- und Schwefelbilanz der Analyse dieser restlichen Lösung hervorgeht: Kohlenstoff 1,3 Ma.% OS und Schwefel 3,34 Ma.% OS.

### Ausführungsbeispiel 2

9,5g Lanthanhexaborid-Abfall wurden als grobe Stückchen mit einer Mischung aus 10g 50%iger Methansulfonsäure und portionsweise 30g 50%igem Wasserstoffperoxid versetzt. Die violette Keramik löste sich langsam auf und schließlich wurde eine klare und farblose Lösung erhalten. In diese Lösung wurden anschließend 8,8g feste Oxalsäure (Dihydrat) eingerührt und nach ½ Stunde Rührzeit konnte ein weißer Feststoff abfiltriert werden. Das getrocknete weiße Pulver wog 14g, welches dem erwarteten Gewicht für das entstandene Lanthanoxalat entspricht. Aus dem Filtrat wurden 4,4 g Borsäure isoliert. Die restliche Lösung enthielt die zurückgebildete Methylsulfonsäure.

Mit der erfindungsgemäßen Lösung können auf umweltschonende und einfache Weise in relativ kurzer Prozesszeit die Selten-Erd-Metalle aus Seltenerdmetallboridabfällen, insbesondere zum Recycling seltenerdmetallhaltiger Boridabfälle, wie sie beispielsweise als Keramiken (z.B. Lanthanhexaborid) oder als Permanetmagnete, z.B. auf der Basis von Neodym-Eisen-Bor eine bedeutende wirtschaftliche Rolle spielen oder aus Industrieabfällen vollständig zurückgewonnen werden.

Dabei kann man Salpetersäure und auch Schwefelsäure, sowie Fe(III) als Oxidationsmittel auffassen, wobei jedoch bei der erfindungsgemäßen Lösung Oxidationsmittel eingesetzt wird, um das Bor zu oxidieren und als echtes Oxidationsprodukt in Form von Borsäure oder Boroxiden als nützliches Nebenprodukt zu gewinnen. Diese chemische Reaktion ist gewollt und mit den im Verfahren des Standes der Technik verwendeten Chemikalien nicht realisierbar. Gleichzeitig wird mit dem erfindungsgemäßen Verfahren verhindert, dass sich giftige Metall(Bor)wasserstoffverbindungen (giftige Gase) bilden.

## Patentansprüche

1. Hydrometallurgisches Verfahren zur Verwertung Seltenerdmetallboride (Keramik, Magnete) enthaltenen Abfällen, **dadurch gekennzeichnet, dass**
a.) die Abfallmaterialien mit einer Reaktionslösung aus Wasser, 1 bis 50 Masse-% Organosulfonsäure und im stöchiometrischen Verhältnis zur Organosulfonsäure 1-50 Masse-% eines Oxidationsmittels versetzt werden, wobei als Oxidationsmittel Perborate, Percarbonate, Hypochlorite oder Peroxide eingesetzt werden, und das Material vollständig aufgelöst wird und
b.) die Organosulfonsäure im Laufe des Prozesses wieder zurückgewonnen wird.

2. Hydrometallurgisches Verfahren nach Anspruch 1, **dadurch gekennzeichnet, dass** sich die Seltenerdmetallboride vollständig auflösen und unter reduzierenden Bedingungen entstehende giftige Elementwasserstoffverbindungen durch die Bildung von Borsäure durch das Oxidationsmittel verhindert werden.

3. Hydrometallurgisches Verfahren nach Anspruch 1 oder 2, **dadurch gekennzeichnet, dass** die Reaktion bei Umgebungstemperatur abläuft.

4. Hydrometallurgisches Verfahren nach Anspruch 1 oder 2, **dadurch gekennzeichnet, dass** die Reaktionszeit durch Erhöhung der Temperatur entsprechend reduziert wird.

5. Hydrometallurgisches Verfahren nach einem der Ansprüche 1 bis 4, **dadurch gekennzeichnet, dass** die eingesetzten festen Reagenzien auch in gelöster Form eingesetzt werden.

6. Hydrometallurgisches Verfahren nach einem der Ansprüche 1 bis 5, **dadurch gekennzeichnet**, die erhaltene Reaktionslösung durch Zugabe von stöchiometrischen Mengen (gerechnet auf den Anteil der SE-Elemente) an Oxalsäure-Dihydrat, wasserfreier Oxalsäure oder Oxalsäurelösungen zur Ausfällung des SE-Oxalates und gleichzeitig zur Rückbildung der jeweiligen Sulfonsäure führt.

7. Hydrometallurgisches Verfahren nach Anspruch 6, **dadurch gekennzeichnet, dass** nach Ausfällung der Oxalate und deren Abtrennung das Filtrat einer Destillation, vorzugsweise unter Vakuum, zugeführt wird und die rückgebildete Sulfonsäure destillativ zurückgewonnen wird.

8. Hydrometallurgisches Verfahren nach einem der Ansprüche 1 bis 7, **dadurch gekennzeichnet, dass** auch das Bor in Form von reiner Borsäure oder nach thermischer Behandlung über 171°C als reines Dibortrioxid zurück gewonnen wird, wobei mögliche Oxalsäurerückstände thermisch vollständig zersetzt werden.

## Claims

1. Hydrometallurgical process for the utilization of wastes containing rare earth metal borides (ceramics, magnets), **characterized in that**
a) the waste materials are mixed with a reaction solution of water, 1 to 50% by weight organosulfonic acid and 1-50% by weight of an oxidizing agent in a stoichiometric ratio to the organosulfonic acid, wherein perborates, percarbonates, hypochlorites or peroxides are used as oxidizing agents, and the material is completely dissolved, and
b) the organosulfonic acid is recovered again during the process.

2. Hydrometallurgical process according to claim 1, **characterized in that** the rare earth metal borides dissolve completely and toxic element hydrogen compounds formed under reducing conditions are prevented by the formation of boric acid by the oxidizing agent.

3. Hydrometallurgical process according to claim 1 or 2, **characterized in that** the reaction takes place at ambient temperature.

4. Hydrometallurgical process according to claim 1 or 2, **characterized in that** the reaction time is reduced accordingly by increasing the temperature.

5. Hydrometallurgical process according to one of claims 1 to 4, **characterized in that** the solid reagents used are also used in dissolved form.

6. Hydrometallurgical process according to one of claims 1 to 5, **characterized in that** the reaction solution obtained leads to precipitation of the SE oxalate by addition of stoichiometric amounts (calculated to the proportion of SE elements) of oxalic acid dihydrate, anhydrous oxalic acid or oxalic acid solutions and simultaneously to the regression of the respective sulfonic acid.

7. Hydrometallurgical process according to claim 6, **characterized in that** after precipitation of the oxalates and their separation the filtrate is fed to a distillation, preferably under vacuum, and the reconstituted sulphonic acid is recovered by distillation.

8. Hydrometallurgical process according to one of claims 1 to 7, **characterized in that** the boron is also recovered in the form of pure boric acid or, after thermal treatment above 171°C, as pure diboric trioxide, wherein possible oxalic acid residues are completely decomposed thermally.

## Revendications

1. Procédé hydrométallurgique de valorisation de déchets contenant des borures de terres rares (céramiques, aimants), **caractérisé en ce que**
a) les déchets sont additionnés d'une solution de réaction composée d'eau, de 1 à 50 % en masse d'acide organosulfonique et, dans un rapport stoechiométrique avec l'acide organosulfonique, de 1 à 50 % en masse d'un oxydant, les oxydants utilisés étant des perborates, des percarbonates, des hypochlorites ou des peroxydes et le matériau étant complètement dissous, et
b) l'acide organosulfonique est entièrement récupéré au cours du processus.

2. Procédé hydrométallurgique selon la revendication 1, **caractérisé en ce que** les borures de terres rares se dissolvent complètement et la formation de composés hydrogénés d'éléments toxiques dans des conditions réductrices est empêchée par la formation d'acide borique par l'oxydant.

3. Procédé hydrométallurgique selon la revendication 1 ou 2, **caractérisé en ce que** la réaction se déroule à température ambiante.

4. Procédé hydrométallurgique selon la revendication 1 ou 2, **caractérisé en ce que** le temps de réaction est raccourci par l'augmentation de la température.

5. Procédé hydrométallurgique selon l'une des revendications 1 à 4, **caractérisé en ce que** les réactifs solides utilisés sont également utilisés sous une forme dissoute.

6. Procédé hydrométallurgique selon l'une des revendications 1 à 5, **caractérisé en ce que** la solution de réaction obtenue provoque, par addition de quantités stoechiométriques (calculées en fonction de la fraction des éléments des terres rares) d'acide oxalique dihydraté, d'acide oxalique anhydre ou de solutions d'acide oxalique, la précipitation de l'oxalate de terres rares et, en même temps, la reformation de l'acide sulfonique utilisé.

7. Procédé hydrométallurgique selon la revendication 6, **caractérisé en ce qu'**après la précipitation des oxalates et leur séparation, le produit de filtration est acheminé vers une destination, de préférence sous vide, et l'acide sulfonique reformé est récupéré par distillation.

8. Procédé hydrométallurgique selon l'une des revendications 1 à 7, **caractérisé en ce que** le bore est également récupéré sous la forme d'acide borique pur ou, après traitement termique à plus de 171 °C, de trioxyde de bore pur, les éventuels résidus d'acide oxalique étant entièrement décomposés par la chaleur.
